# EUROPÄISCHE PATENTSCHRIFT

(11) **EP 1 690 044 B1**
(45) Veröffentlichungstag und Bekanntmachung des Hinweises auf die Patenterteilung: **22.08.2007**
(21) Anmeldenummer: 04765950.3
(22) Anmeldetag: 13.10.2004
(51) Int. Cl.: F24F 5/00, F24F 1/02, F24F 13/20

(54) **Kuehlvorrichtung**
Cooling device
Dispositif de refrigeration

(30) Priorität: 13.11.2003 DE 10353046
(43) Veröffentlichungstag der Anmeldung: 16.08.2006
(73) Patentinhaber: Lessing, Jürgen, 90431 Nürnberg (DE)
(72) Erfinder: Lessing, Jürgen, 90431 Nürnberg (DE)
(74) Vertreter: Manitz, Finsterwald & Partner GbR
(86) Internationale Anmeldenummer: PCT/EP2004/011484
(87) Internationale Veröffentlichungsnummer: WO 2005/047778

(56) Entgegenhaltungen:
- EP-A2- 0 534 805
- EP-A2- 0 727 622
- DE-A1- 19 709 176
- US-A- 2 896 425
- US-A- 6 038 879

## Beschreibung

Die vorliegende Erfindung betrifft eine Kühlvorrichtung, insbesondere zum Kühlen von Kühlräumen, mit zwei wechselweise aktivierbaren Wärmetauschern, insbesondere Verdampfer oder Kühler eines Kältekreislaufs, und mindestens einem Gebläse zum Hindurchblasen von Gas, insbesondere Luft, durch die Wärmetauscher.

Aus der DE 197 09 176 C2 ist eine Kühlvorrichtung der eingangs genannten Art bekannt. Bei dieser Kühlvorrichtung sind die beiden wechselweise aktivierbaren, mit Lamellen ausgebildeten Wärmetauscher neben- bzw. übereinander angeordnet und werden von dem gleichen Strom des abzukühlenden Mediums durchströmt. Dies bedeutet, dass die beiden Wärmetauscher je nur mit der Hälfte des Stromes beaufschlagt sind. Um eine gewünschte Beaufschlagung mit einem Mediumstrom zu erreichen, muss der Gesamtstrom daher doppelt so groß gewählt werden. Entsprechend groß muss das Gebläse ausgebildet werden, wodurch die Kosten sowie der Platzbedarf erhöht sind.

Der Erfindung liegt die Aufgabe zugrunde, eine Kühlvorrichtung der eingangs genannten Art anzugeben, welche diese Nachteile nicht aufweist. Insbesondere soll die Kühlvorrichtung kostengünstig und platzsparend ausgebildet sein.

Diese Aufgabe wird dadurch gelöst, dass die Wärmetauscher so angeordnet sind, dass sie zumindest bei Aktivierung jeweils von dem gesamten Gasstrom des Gebläses durchströmbar sind.

Durch die Anordnung der Wärmetauscher derart, dass sie jeweils von dem gesamten Gasstrom des Gebläses durchströmbar sind, kann der erforderliche Gesamtgasstrom gegenüber den bekannten Vorrichtungen auf etwa die Hälfte reduziert werden. Dementsprechend muss das Gebläse geringer dimensioniert werden, wodurch Kosten und Platz eingespart werden.

Eine Durchströmung beider Wärmetauscher vom gesamten Gasstrom kann insbesondere dadurch erreicht werden, dass die beiden Wärmetauscher in Strömungsrichtung hintereinander angeordnet sind. Dabei können beide Wärmetauscher auf derselben Seite des Gebläses angeordnet sein. Dadurch werden automatisch beide Wärmetauscher mit dem gesamten Gasstrom beaufschlagt, unabhängig davon, in welche Richtung das Gebläse bläst.

Eine andere Anordnung besteht darin, dass ein erster Wärmetauscher in Strömungsrichtung vor und ein zweiter Wärmetauscher in Strömungsrichtung hinter dem oder den Gebläsen angeordnet ist. Die beiden Wärmetauscher können dadurch das Gebläse vor Außeneinflüssen schützen.

Besonders kostengünstig ist eine Ausgestaltung, bei welcher die Wärmetauscher frei vor bzw. hinter dem oder den Gebläsen angeordnet sind. Es sind dadurch keine zusätzlichen Bauteile erforderlich, und es können herkömmliche Wärmetauscher verwendet werden. Spezialanfertigungen wie bei der eingangs genannten Kühlvorrichtung sind nicht erforderlich.

Zwischen dem oder den Gebläsen und den Wärmetauschern können aber auch Gasführungskanäle angeordnet sein. Dadurch ergeben sich mehrere Vorteile. Unter anderem können die Wärmetauscher und das Gebläse voneinander beabstandet angeordnet werden. Außerdem können in den Gasführungskanälen Druckmesseinrichtungen wie Druckdosen, Filter sowie Schalldämpfer angeordnet werden.

Nach einer weiteren Ausgestaltung der Erfindung sind auch das oder die Gebläse und die Wärmetauscher in geschlossenen Gasführungen angeordnet. Dadurch kann die vom Gebläse erzeugte Strömung vollständig ausgenutzt und eine gute Strömungsführung erzielt werden.

Besonders bevorzugt ist es, wenn das oder die Gebläse und die Wärmetauscher in einem gemeinsamen Gehäuse angeordnet sind. Dies ist zum einen platzsparend und bewirkt zudem einen guten Schutz des oder der Gebläse durch die davor und/ oder dahinter angeordneten Wärmetauscher.

An das Gehäuse können bevorzugt zumindest gasaustrittsseitig Gasführungskanäle anschließbar sein. Dies ermöglicht vorteilhafterweise die entfernte Aufstellung des Gehäuses von dem zu kühlenden Ort, beispielsweise in der Zwischendecke eines Kühlraums oder vollständig außerhalb eines den Kühlraum umschließenden Gebäudes.

Nach einer besonderen Ausgestaltung der Erfindung ist ein Gebläse mit umkehrbarer Blasrichtung vorgesehen. Durch Umkehren der Blasrichtung des Gebläses kann die Strömungsrichtung des Gases durch die vor bzw. hinter dem Gebläse angeordneten Wärmetauscher umgekehrt werden, insbesondere derart, dass das Gas durch den jeweils nicht aktiven Wärmetauscher angesaugt und durch den jeweils aktiven Wärmetauscher ausgeblasen wird. Der nicht aktive Wärmetauscher wird so von dem zu kühlenden Gas durchströmt und von diesem erwärmt, was bei Verdampfern eines Kühlkreislaufs vorteilhafterweise zum Abtauen eingesetzt werden kann, wenn die Temperatur des zu kühlenden Gases oberhalb des Gefrierpunktes liegt. Anschließend passiert das dadurch bereits abgekühlte Gas den aktivierten zweiten Wärmetauscher, wobei es in der gewünschten Weise weiter abgekühlt wird.

Durch wechselseitiges Aktivieren der beiden Wärmetauscher und entsprechendes Umkehren der Blasrichtung des Gebläses kann so stets ein Wärmetauscher abgetaut und einer zur Kühlung verwendet werden. Dies hat auch den Vorteil, dass sich die Ausblasrichtung der Anlage zyklisch ändert, wodurch eine bessere Verteilung des abgekühlten Gases im Kühlraum erreicht werden kann. Sollte dagegen ein Ausblasen stets nur in einer Richtung gewünscht sein, kann dies durch eine geeignete Anordnung von Gasführungskanälen und Klappen vor den Aus- bzw. Eingängen der Kühlvorrichtung erreicht werden.

Nach einer anderen Ausgestaltung ist die unterschiedliche Durchströmungsrichtung der Wärmetauscher durch klappengesteuerte Fluidführungen verwirklicht.

Auch mit dieser Ausgestaltung kann das Gas wechselweise durch den einen Wärmetauscher angesaugt und durch den anderen Wärmetauscher ausgeblasen werden, wobei jeweils der eine Wärmetauscher inaktiv ist und gegebenenfalls abgetaut wird, während der andere Wärmetauscher zur Kühlung aktiviert ist. Eine Umkehr der Blasrichtung ist bei dieser Anordnung nicht erforderlich. Ein weiterer Vorteil besteht darin, dass die Gebläseleistung für die einzige Blasrichtung des Gebläses optimierbar ist.

Nach einer speziellen Ausgestaltung der Erfindung ist ein Gebläse vorgesehen, dessen Blasseite über Umschaltklappen und entsprechende Gasführungskanäle wechselweise mit dem ersten oder dem zweiten Wärmetauscher und dessen Saugseite mit dem jeweils anderen Wärmetauscher verbindbar ist. Bei dieser Variante ist also das Gebläse zwischen den beiden Wärmetauschern angeordnet.

Nach einer anderen speziellen Ausgestaltung ist ein Gebläse vorgesehen, dessen Saugseite mit der Eintrittsöffnung der Vorrichtung und dessen Blasseite wechselweise mit dem ersten oder dem zweiten Wärmetauscher verbunden ist, wobei der jeweils andere Wärmetauscher einerseits mit dem einen Wärmetauscher und andererseits mit der Austrittsöffnung der Vorrichtung verbunden ist. Bei dieser Variante sind demnach beide Wärmetauscher in Strömungsrichtung vor oder beide Wärmetauscher hinter dem Gebläse angeordnet.

Nach noch einer speziellen Ausgestaltung der Erfindung sind zwei gegensinnig und parallel zueinander angeordnete Gebläse vorgesehen, die jeweils über Gasführungskanäle mit den beiden Wärmetauschern verbunden und wechselweise aktivierbar sind. Auch hiermit kann wieder erreicht werden, dass das zu kühlende Gas wechselweise durch den einen Wärmetauscher angesaugt und durch den anderen Wärmetauscher ausgeblasen wird. Hierbei ist jeweils ein Gebläse aktiv und das andere Gebläse inaktiv. Auch hier besteht der Vorteil, dass die Gebläseleistung für die einzige Strömungsrichtung optimierbar ist.

Über eine Klappe ist der jeweils nicht aktive Zweig dieser Anordnung bevorzugt absperrbar. Dadurch kann eine Fehlströmung durch den nicht aktiven Zweig vermieden werden.

Nach einer besonders bevorzugten Ausgestaltung der Erfindung sind die Eintrittsöffnung und die Austrittsöffnung der Vorrichtung unabhängig von der Durchströmungsrichtung der Wärmetauscher jeweils durch dieselbe Öffnung gebildet. Dadurch ergibt sich der Vorteil, dass ein hinter der Eintrittsöffnung angebrachter Filter stets in derselben Richtung durchströmt wird. Es müssen daher keine Wechselfilter vorgesehen werden, was eine besonders gute Abdichtung der Filter ermöglicht. Fehlluft kann hierdurch so weitgehend vermieden werden, dass eine hohe Filterleistung bis hin zu Reinstraumtechnik gewährleistet werden kann.

Ebenfalls bevorzugt ist es, wenn Eintrittsöffnung und Austrittsöffnung des Gehäuses stets auf derselben Seite der Vorrichtung, insbesondere nebeneinander angeordnet sind. Hierdurch kann ein besonders kompakter Aufbau der Vorrichtung erreicht werden, wodurch der Platzbedarf vorteilhafterweise verringert werden kann.

Eine weitere Verringerung des Platzbedarfs kann dadurch erreicht werden, dass die Fluidführungen nach einer weiteren Ausgestaltung der Erfindung zumindest abschnittsweise in verschiedenen Ebenen verlaufen, insbesondere über- und untereinander. Außerdem ist diese Variante besonders vorteilhaft, wenn Eintrittsöffnung und Austrittsöffnung auf derselben Seite der Vorrichtung angeordnet sind.

Vorteilhaft ist es des weiteren, wenn der Durchmesser der Fluidführungen in verschiedenen Abschnitten unterschiedlich ist. Insbesondere kann der Durchmesser im Bereich der Wärmetauscher größer sein als davor oder dahinter, beispielsweise im Verhältnis von etwa 2:1. Auch damit kann die Baugröße weiter verringert werden, ohne dass die Leistungsfähigkeit der Vorrichtung merklich eingeschränkt wird, da der Querschnitt im Bereich der Wärmetauscher vorteilhaft groß gehalten werden kann und der verringerte Querschnitt im übrigen kaum eine Beeinträchtigung bedeutet.

Als Gebläse können bei der erfindungsgemäßen Kühlvorrichtung Axialgebläse verwendet werden. Bevorzugt können bei der erfindungsgemäßen Kühlvorrichtung jedoch auch Radialgebläse eingesetzt werden. Diese haben den Vorteil einer deutlich höheren Pressung, was insbesondere bei der Verwendung von Gasführungskanälen zum Tragen kommt.

Auch ermöglicht die Verwendung von Radialgebläsen den Einsatz von Filtern für das zu kühlende Gas. Diese können insbesondere in den Gasführungskanälen und/oder im Gebläsegehäuse angeordnet sein. Durch Verwendung von Filtern kann hohen Hygieneansprüchen Genüge getan werden.

Als Filter kann insbesondere mindestens ein Drehfilter vorgesehen sein, der in Abhängigkeit von der Gasströmungsrichtung verdrehbar ist. Auf diese Weise wird der Filter von der Gasströmung immer in derselben Richtung beaufschlagt. Ein Wiederausblasen von ausgefilterten Partikeln kann dadurch vermieden werden.

Nach einer weiteren Ausgestaltung der Erfindung ist mindestens ein Rollfilter vorgesehen. Dieser kann beispielsweise als Einmalfilter ausgebildet sein und bei jeder Umkehr der Strömungsrichtung entsprechend weitergedreht werden.

Nach einer anderen Ausgestaltung der Erfindung kann die Filterrolle aber auch in Abhängigkeit von der Gasströmungsrichtung zyklisch hin- und herbewegbar ausgebildet sein. Dadurch wird ein Abschnitt der Filterrolle jeweils immer in derselben Richtung mit der Gasströmung beaufschlagt, so dass auch hier das Wiederausblasen von Partikeln vermieden werden kann. Bei Erreichen eines bestimmten Beladungsgrades des Filters kann die Rolle dann um die doppelte Filterlänge weitergedreht werden, so dass zwei neue Abschnitte des Rollfilters wechselweise eingesetzt werden können.

In den Gasführungskanälen und/oder im Gebläsegehäuse kann mindestens eine Druckmesseinrichtung, insbesondere Druckdose, angeordnet sein. Diese kann sowohl zur Feststellung des Vereisungsgrades der Wärmetauscher sowie zur Feststellung der Notwendigkeit eines Filterwechsels eingesetzt werden.

Ein Filterwechsel oder ein Weiterdrehen eines Rollfilters kann aber auch nach Ablauf einer vorbestimmten oder vorbestimmbaren Zeit ausgelöst oder angezeigt werden, wofür nach einer weiteren Ausgestaltung der Erfindung entsprechende Mittel vorgesehen sind. Eine Druckmesseinrichtung kann dadurch eingespart werden. Dennoch können aufgrund von Erfahrungswerten gute Ergebnisse erzielt werden.

Auch die Umkehr der Strömungsrichtung durch die beiden Wärmetauscher kann zeitabhängig erfolgen, wofür ebenfalls bevorzugt geeignete Mittel vorgesehen sind. Auch hiermit können aufgrund von Erfahrungswerten gute Ergebnisse erzielt werden und entsprechende Messeinrichtungen wie Druckmesseinrichtungen zur Erfassung des Vereisungsgrades der Wärmetauscher eingespart werden.

Nach einer weiteren Ausgestaltung der Erfindung sind in den Gasführungskanälen und/oder im Gebläsegehäuse, insbesondere im Bereich der Austrittsöffnung, Mittel zur Entkeimung vorgesehen. Auch dadurch kann Hygieneanforderungen Genüge getan werden, wobei die Entkeimung im Austrittsbereich besonders wirksam ist.

Zur Entkeimung können bevorzugt Mittel zur UV-Bestrahlung oder Ionisierung vorgesehen sein. Alternativ oder zusätzlich ist es auch möglich, Mittel zur Einspritzung von Desinfektionsmittel, beispielsweise Fruchtsäure, vorzusehen. Beide Maßnahmen sind zur Entkeimung gut geeignet.

Die beiden Wärmetauscher werden grundsätzlich wechselseitig betrieben. Nach einer Ausgestaltung der Erfindung ist aber auch ein überlappender Betrieb durch eine entsprechende Steuerung für die Aktivierung der Wärmetauscher möglich. Durch eine solche Steuerung kann kurzfristig eine erhöhte Kühlleistung zur Verfügung gestellt werden. Außerdem kann dadurch die Luftfeuchte reguliert werden.

Vorteilhaft sind des weiteren Schalldämpfungseinrichtungen im Gebläsegehäuse oder den Gasführungen. Dadurch kann die Lärmabstrahlung der Vorrichtung verringert werden.

Zur Regelung der Leistung der Kühlvorrichtung ist die Drehzahl des oder der Gebläse nach einer weiteren Ausgestaltung vorteilhafterweise regelbar.

Eine vorteilhafte Konstruktion ergibt sich, wenn das Gehäuse mehrere Kammern aufweist. Für Wartungs- und Reparaturzwecke ist es dabei vorteilhaft, wenn die Kammern jeweils über eine eigene Zutrittsöffnung, insbesondere Tür, zugänglich sind.

Vorteilhaft ist es des weiteren, wenn jede Kammer einen eigenen Tauwasserablauf aufweist. Wartungs- und Reparaturmaßnahmen können außerdem dadurch erleichtert werden, dass in dem Gehäuse eine Beleuchtungseinrichtung vorgesehen ist.

Nicht beschränkende Ausführungsbeispiele der Erfindung sind in den Zeichnungen dargestellt und werden nachfolgend beschrieben. Es zeigen, jeweils in schematischer Darstellung,
- Fig. 1: ein Blockdiagramm einer ersten Variante der erfindungsgemäßen Kühlvorrichtung,
- Fig. 2: eine Darstellung gemäß Fig. 1 einer zweiten Variante,
- Fig. 3: eine Darstellung gemäß Fig. 1 einer dritten Variante,
- Fig. 4: eine Oberansicht einer vierten Variante der erfindungsgemäßen Kühlvorrichtung,
- Fig. 5: eine perspektivische Ansicht der Variante von Fig. 4 aus einer ersten Blickrichtung, und
- Fig. 6: eine perspektivische Ansicht derselben Vorrichtung aus einer zweiten Blickrichtung.

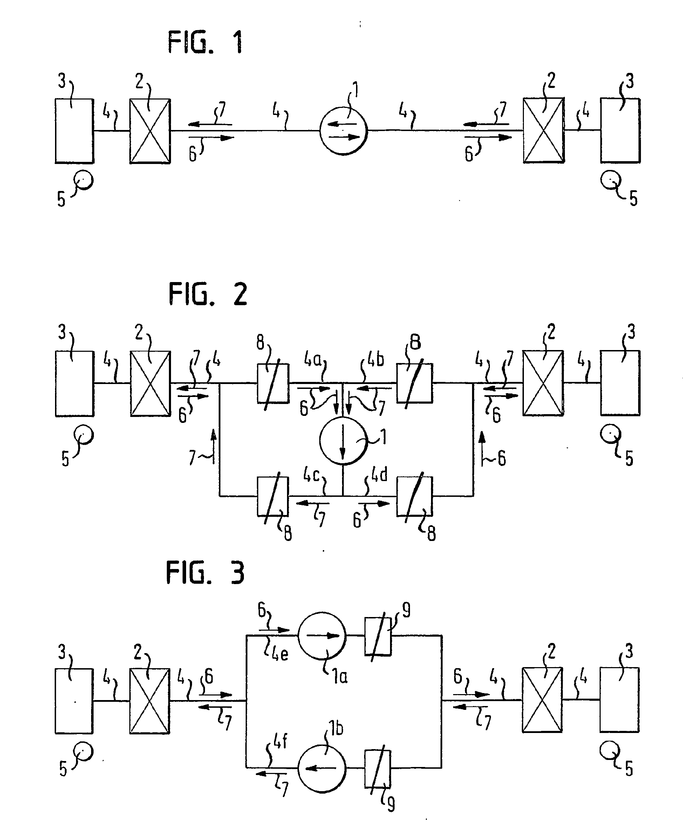

Fig. 1 zeigt ein Gebläse 1, zwei beidseits vom Gebläse 1 angeordnete Wärmetauscher 2 sowie zwei jeweils auf der dem Gebläse 1 abgewandten Seite der beiden Wärmetauscher 2 angeordnete Filter 3. Zwischen dem Gebläse 1 und den Wärmetauschern 2 sowie den Filtern 3 sind Gasführungen 4 vorhanden, wobei diese in Kanälen oder Leitungen bestehen können. Das Gebläse 1 und die Wärmetauscher 2 sowie bevorzugt auch die Filter 3 können aber auch in einem gemeinsamen Gehäuse angeordnet sein, welches dann die schematisch dargestellte Gasführung zwischen den genannten Bauelementen sicherstellt.

Zusätzlich dargestellt sind zwei Druckdosen 5, über welche der Druck auf beiden Seiten des Gebläses 1 feststellbar ist. Eine solche Druckdose 5 kann sowohl, wie dargestellt, im Bereich der Filter 3 angeordnet sein, um auf den Grad der Beladung der Filter 3 schließen zu können, als auch im Bereich der Wärmetauscher 2, um auf deren Vereisungsgrad schließen zu können. Um beides feststellen zu können, können auch mehrere Druckdosen 5 je Seite vorgesehen sein.

Das Gebläse 1 ist als Radiallüfter ausgebildet, dessen Drehrichtung umkehrbar ist. Auf diese Weise kann eine Gasströmung sowohl in Richtung des Pfeils 6 als auch in umgekehrter Richtung gemäß Pfeil 7 erzeugt werden. Die Umschaltung kann in Abhängigkeit vom Vereisungsgrad der Wärmetauscher 2 oder zeitabhängig erfolgen. Eine entsprechende Steuerung ist vorgesehen, jedoch nicht dargestellt.

Die Filter 3 können als Drehfilter, insbesondere als um 180° drehbare Taschenfilter ausgebildet sein. Über eine geeignete Steuerung kann die Drehstellung entsprechend der Blasrichtung des Gebläses 1 eingestellt werden, so dass die Filter stets in derselben Richtung vom Gasstrom 6 bzw. 7 beaufschlagt werden und die von den Filtern 3 aufgenommenen Partikel nicht wieder ausgeblasen werden, wenn sich die Drehrichtung des Gebläses 1 umkehrt. Der Filter 3 auf der Ausströmseite könnte aber auch einfach aus der Strömung heraus bewegt werden, da es oft ausreicht, wenn der Filter 3 auf der Ansaugseite aktiv ist.

Anstelle von Taschenfiltern können auch Rollfilter verwendet werden, bei denen Filtermaterial von einer Rolle abwickelbar ist. Ist der Rollfilter als Einmalfilter ausgebildet, so wird dieser bei Richtungsumkehr des Gebläses 1 jeweils um eine entsprechende Länge von der Rolle abgewickelt. Es kann aber auch ein Mehrfachfilter verwendet werden, bei welchem die Steuerung den Filter zyklisch auf- und abwickelt, so dass stets derselbe Abschnitt des Filters bei der einen und bei der anderen Blasrichtung 6, 7 des Gebläses 1 wirksam ist._Die Steuerung kann außerdem so ausgebildet sein, dass bei einem bestimmten Beladungsgrad des Filters die Rolle so weit weitergedreht wird, dass zwei neue Abschnitte zum Auf- und Abwickeln auf die Rolle zur Verfügung stehen.

Die Notwendigkeit eines Filterwechsels bzw. Weiterdrehens eines Rollfilters kann über eine geeignete Steuerung in Abhängigkeit des Druckes festgestellt werden. Die Steuerung kann dies dann zur Anzeige bringen und/oder einen automatischen Wechsel bzw. ein automatisches Weiterdrehen des Filters einleiten.

Statt über den Druck kann die Steuerung die Notwendigkeit eines Filterwechsels aber auch über den Zeitablauf feststellen. Die Zeitspanne ergibt sich insbesondere aus Erfahrungswerten und kann voreingestellt sein. Die Zeitspanne kann aber auch veränderbar sein und durch den Anwender vorbestimmt werden.

Die Wärmetauscher 2 können mit Lamellen ausgebildet sein, wie dies beispielsweise in der DE 197 09 176 C2 beschrieben ist. Im übrigen können aber herkömmliche Wärmetauscher verwendet werden, wie sie auch für einfache, nur in eine Richtung blasende Gebläse eingesetzt werden. Auch für das Gebläse 1 können solche herkömmlichen Gebläse eingesetzt werden.

Bei der in Fig. 2 dargestellten Variante ist die Drehrichtung des Gebläses 1 nicht umkehrbar. Statt dessen ist das Gebläse 1 jeweils über zwei alternative Wege 4a, 4b bzw. 4c, 4d mit den beiden Wärmetauschern 2 verbunden. In jedem dieser vier Abschnitte 4a, 4b, 4c, 4d ist eine Absperrklappe 8 angeordnet, welche je nach gewünschter Strömungsrichtung des Gasstromes 6 oder 7 geöffnet oder geschlossen wird.

Zur Bewirkung einer Strömung gemäß den Pfeilen 6 sind die Klappen 8 in den Abschnitten 4a und 4d geöffnet und in Abschnitten 4b und 4c geschlossen. Entsprechend sind zur Bewirkung einer Strömung gemäß den Pfeilen 7 die Klappen 8 in den Abschnitten 4b und 4c geöffnet und in den Abschnitten 4a und 4d geschlossen. Das Gebläse 1 ist auch hier bevorzugt als Radiallüfter ausgebildet, wobei es nun jedoch aufgrund der einzigen Drehrichtung besser optimiert werden kann. Im übrigen kann die Ausbildung dieser Variante mit der zuvor beschriebenen identisch sein. Auch die Betriebsweise ist, abgesehen von der Umschaltung der Klappen 8, identisch.

Bei der in Fig. 3 dargestellten Variante sind zwei Gebläse 1a und 1b vorgesehen, die parallel zueinander und mit entgegengesetzter Drehrichtung in je einem Teilabschnitt 4e, 4f der Gasführung 4 angeordnet sind. Je nach gewünschter Strömungsrichtung 6 oder 7 wird das eine Gebläse 1a oder das andere Gebläse 1b eingeschaltet. Insbesondere wird durch Einschalten des Gebläses 1a und Absperren des Abschnitts 4f eine Strömung in Richtung Pfeil 6 und durch Einschalten des Gebläses 1b und Absperrung des Abschnitts 4e eine Strömung in Richtung Pfeil 7 erzeugt. Über Absperrklappen 9 in den beiden Abschnitten 4e und 4f wird jeweils der Abschnitt 4e oder 4f mit dem nicht aktiven Gebläse 1a oder 1b abgesperrt, um eine Fehlströmung zu vermeiden.

Die beiden Gebläse 1a und 1b sind bevorzugt wiederum als Radialgebläse ausgebildet und auf ihre jeweilige Strömungsrichtung optimiert. Im übrigen kann auch hier die Vorrichtung in derselben Weise ausgebildet sein, wie bei Variante 1. Auch ist die Betriebsweise bis auf die wechselweise Aktivierung der beiden Gebläse 1a und 1b und die Absperrung des jeweils anderen Abschnittes 4f oder 4e identisch mit Variante 1.

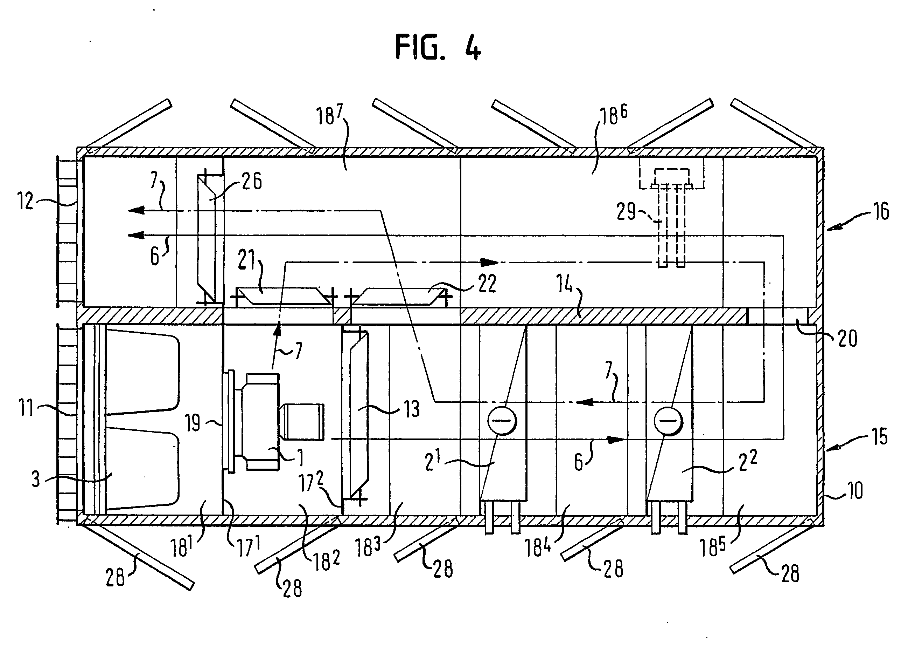

Die in den Fig. 4 bis 6 dargestellte Variante umfasst ein Gehäuse 10 mit einer Eintrittsöffnung 11 und einer Austrittsöffnung 12. Hinter der Eintrittsöffnung 11 ist ein Filter 3 und dahinter ein in seiner Drehrichtung nicht umkehrbares Gebläse 1 angeordnet. Die Saugseite des Gebläses 1 weist zur Eintrittsöffnung 11 des Gehäuses 10. Auf der Blasseite des Gehäuses 1 folgt auf dieses eine Klappe 13 und dahinter die beiden Wärmetauscher 2.

Das Gehäuse 10 ist durch eine Trennwand 14 in zwei Bereiche 15 und 16 unterteilt, die ihrerseits durch Trennwände 17 in mehrere Kammern 18 unterteilt sind. In einer ersten Kammer 18¹ hinter der Eintrittsöffnung 11 des Gehäuses 10 ist der Filter 3 angeordnet. Darauf folgt eine Kammer 18², die von der ersten Kammer durch eine Trennwand 17¹ getrennt ist. Die Trennwand 17¹ weist eine Durchtrittsöffnung 19 auf, an welche die Saugseite des Gebläses 1 angeschlossen ist.

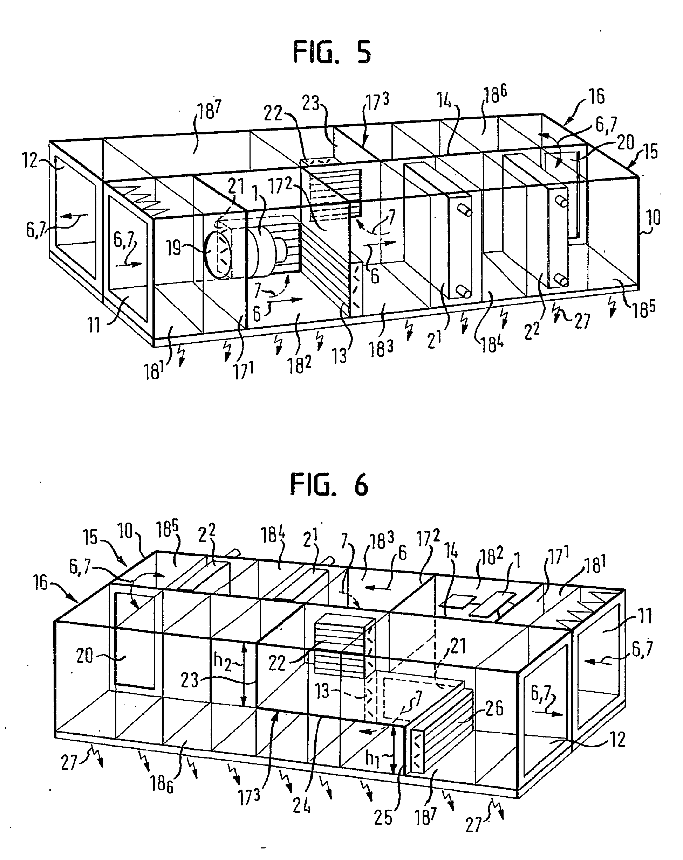

Die Kammer 18² mit dem Gebläse 1 wird andererseits durch eine Trennwand 17² begrenzt, in welcher die Klappe 13 vorgesehen ist. Wie man insbesondere in Fig. 5 erkennt, beträgt die Höhe der Klappe 13 dabei etwa die Hälfte der Höhe der Trennwand 17².

Die Trennwand 17² begrenzt mit dem ersten Wärmetauscher 2¹ eine weitere Kammer 18³, der erste Wärmetauscher 2¹ mit dem zweiten Wärmetauscher 2² eine Kammer 18⁴ und der zweite Wärmetauscher 2² mit dem Gehäuse 10 eine weitere Kammer 18⁵. Alle Kammern 18¹ bis 18⁵ befinden sich im ersten Gehäuseabschnitt 15.

Im zweiten Gehäuseabschnitt 16 ist, wie man insbesondere in Fig. 6 erkennt, durch eine zweifach abgewinkelte Trennwand 17³ eine Kammer 18⁶ und eine Kammer 18⁷ gebildet. Die Kammer 18⁶ steht über eine Öffnung 20 mit der Kammer 18⁵ in Verbindung. Eine weitere Verbindung der Kammer 18⁶ besteht über eine Klappe 21 mit der Kammer 18², in welcher sich das Gebläse 1 befindet. Die Kammer 18⁷ ist über noch eine Klappe 22 mit der Kammer 18³ und über eine weitere Klappe 26 mit der Kammer 18⁶ verbunden.

Die abgewinkelte Trennwand 17³ weist einen ersten vertikalen Abschnitt 23 auf, der mit der Oberseite des Gehäuses 10 verbunden ist, einen daran anschließenden horizontalen Abschnitt 24 und einen an diesen anschließenden zweiten vertikalen Abschnitt 25, der mit dem Boden des Gehäuses 10 verbunden ist. Die Höhe h₁ des zweiten vertikalen Abschnitts ist etwa um die Hälfte kleiner als die Höhe h₂ des ersten vertikalen Abschnitts. Außerdem ist in dem zweiten vertikalen Abschnitt 25 die weitere Klappe 26 vorgesehen.

Alle Kammern 18 des Gehäuses 10 sind mit einem eigenen Tauwasserablauf versehen, wie durch Zackenpfeile 27 angedeutet. Außerdem sind die Kammern über Türen 28 zugänglich, insbesondere für Wartungs- und Reparaturarbeiten. In der Kammer 18⁶ ist des weiteren eine UV-Bestrahlungseinrichtung 29 vorgesehen, durch welche das durch die Vorrichtung geführte Medium entkeimt werden kann. Schließlich kann in dem Gehäuse 10 eine Beleuchtung vorgesehen sein.

Bei der in den Fig. 4 bis 6 dargestellten Variante wird die Eingangsöffnung stets unabhängig von der Durchströmungsrichtung der beiden Wärmetauscher 2¹ und 2² durch die Öffnung 11 und die Austrittsöffnung stets durch die Öffnung 12 des Gehäuses 10 gebildet. Um dennoch eine wechselnde Durchströmung der beiden Wärmetauscher 2¹ und 2² zu ermöglichen, sind die Klappen 17, 21, 22 und 26 vorgesehen. Zur Durchströmung der Vorrichtung in der durch den Pfeil 6 gekennzeichneten ersten Richtung sind die Klappen 17 und 26 geöffnet, die Klappen 21 und 22 dagegen geschlossen. Der durch das Gebläse 1 angesaugte Gasstrom gelangt von der Eintrittsöffnung 11 über den Filter 3 in die Kammer 18¹ und von dort in die Kammer 18². Danach gelangt der Gasstrom durch die Klappe 13 in die Kammer 18³, durchströmt den ersten Wärmetauscher 2¹, der in diesem Fall inaktiv ist und durch den warmen Gasstrom abgetaut wird, dann in die Kammer 18⁵, danach durch den aktiven Wärmetauscher 2², durch welchen der Gasstrom abgekühlt wird, und danach in die Kammer 18⁵. Von dort gelangt der Gasstrom über die Öffnung 20 in der Wand 14 in die Kammer 18⁶, in welcher der Gasstrom durch die UV-Bestrahlungseinrichtung 29 entkeimt wird. Sodann durchströmt der Gasstrom die Klappe 26, gelangt in die Kammer 18⁷ und tritt von dort über die Austrittsöffnung 12 aus dem Gehäuse 10 der Vorrichtung aus.

Bei umgekehrtem Betrieb der Vorrichtung gemäß Pfeil 7 werden die Klappen 17 und 26 geschlossen, während die Klappen 21 und 22 geöffnet sind. Nun gelangt der durch das Gebläse 1 angesaugte Gasstrom von der Kammer 18² nicht mehr in die Kammer 18³, da die Klappe 13 geschlossen ist, sondern über die Klappe 21 in die Kammer 18⁶. Von dort strömt das Gas weiter durch die Öffnung 20 in der Wand 14 in die Kammer 18⁵, durchströmt den zweiten, jetzt inaktiven Wärmetauscher 2², wobei dieser aufgetaut wird, weiter in die Kammer 18⁴, sodann durch den ersten, jetzt aktiven Wärmetauscher 2¹, welcher den Gasstrom abkühlt, und dann in die Kammer 18³. Da die Klappe 13 geschlossen ist, gelangt der Gasstrom von der Kammer 18³ über die Klappe 22 in die Kammer 18⁷ und strömt von dort über die Austrittsöffnung 12 des Gehäuses 10 aus. Auch bei dieser Betriebsrichtung wird das Gas durch die UV-Bestrahlungseinrichtung 29 in der Kammer 18⁶ entkeimt. Anstelle der Anordnung der Bestrahlungseinrichtung in Kammer 18⁶ kann diese auch in Kammer 18⁷, also im Bereich der Austrittsöffnung 12 angeordnet sein.

Wie man erkennt, können die beiden Wärmetauscher 2¹ und 2² gemäß der beschriebenen Betriebsweise wahlweise in der einen oder der anderen Richtung 6, 7 durchströmt werden. Durch das Verhältnis des Gehäuseabschnitts 15 zum Gehäuseabschnitt 16 von ca. 2 : 1 ist ein großer Querschnitt der Wärmetauscher und andererseits eine insgesamt relativ geringe Gehäusegröße realisiert. Die dadurch auftretenden Querschnittsveränderungen haben auf die Strömung keinen nachteiligen Einfluss.

In allen dargestellten Varianten werden beide Wärmetauscher 2, bei denen es sich insbesondere um den Verdampfer oder Kühler eines Kältekreislaufs handeln kann, jeweils vom gesamten Gasstrom des Gebläses 1 bzw. der Gebläse 1a, 1b durchströmt. Das heißt, es wird Gas durch den einen Wärmetauscher 2 angesaugt, der dann nicht aktiviert ist, und durch den anderen Wärmetauscher 2, der aktiviert ist, ausgeblasen. Ist der erste Wärmetauscher 2 vereist, so wird das angesaugte Gas bereits gekühlt. Dadurch wird bei Gas mit einer Temperatur oberhalb des Gefrierpunktes der erste Wärmetauscher 2 abgetaut, ohne dass elektrische oder sonstige Abtaueinrichtungen erforderlich sind. Im aktiven zweiten Wärmetauscher, wird das Gas in der gewünschten Weise weiter abgekühlt.

Nach Erreichen eines bestimmten Vereisungsgrades des zweiten Wärmetauschers 2 oder nach einem vorbestimmten Zeitablauf wird die Strömungsrichtung umgeschaltet, indem im Fall der Variante von Fig. 1 die Drehrichtung des Gebläses 1 umgeschaltet wird. Im Fall der Variante von Fig. 2 werden hierfür die Klappen 8 von ihrer geöffneten in ihre geschlossene und von ihrer geschlossenen in ihre geöffnete Stellung umgeschaltet. Und im Fall der Variante von Fig. 3 wird, wenn zunächst das Gebläse 1a eingeschaltet war, dieses ausgeschaltet und das andere Gebläse 1b eingeschaltet sowie die geschlossene Klappe 9 geöffnet und die geöffnete Klappe 9 geschlossen. War andererseits das Gebläse 1b eingeschaltet, so erfolgt die Umschaltung entsprechend umgekehrt. Die Umschaltung bei der Variante von Fig. 4 bis 6 wurde bereits oben beschrieben.

In allen Fällen ist auch ein überlappender Betrieb möglich, bei welchem für einen bestimmten Zeitraum beide Wärmetauscher 2 aktiv sind. Hierdurch kann einerseits die Kühlleistung kurzfristig erhöht werden und andererseits kann dadurch der Feuchtegehalt des Gases reguliert werden.

Aufgrund der Verwendung eines Radialgebläses, mit welchem eine deutlich höhere Pressung realisiert werden kann als bei einem Axialgebläse, können Filter 3, Gasführungskanäle 4 sowie auch Schalldämpfungseinrichtungen verwendet werden. Das Geräusch der Kühleinrichtung kann dadurch vorteilhafterweise reduziert werden.

In dem Gebläsegehäuse können außerdem Mittel zur Entkeimung wie UV-Strahlung und Mittel zum Einspritzen von Desinfektionsmittel wie Fruchtsäure vorgesehen sein.

### Bezugszeichenliste

- 1: Gebläse
- 1a, 1b: Gebläse
- 2, 2¹, ²: Wärmetauscher
- 3: Filter
- 4: Gasführung
- 4a - 4f: Abschnitt von 4
- 5: Druckdose
- 6: Strömungsrichtung
- 7: Strömungsrichtung
- 8: Klappe
- 9: Klappe
- 10: Gehäuse
- 11: Eintrittsöffnung
- 12: Austrittsöffnung
- 13: Klappe
- 14: Wand
- 15: Gehäuseabschnitt
- 16: Gehäuseabschnitt
- 17¹-17³: Trennwand
- 18¹-18⁷: Kammer
- 19: Öffnung
- 20: Öffnung
- 21: Klappe
- 22: Klappe
- 23: vertikaler Abschnitt
- 24: horizontaler Abschnitt
- 25: vertikaler Abschnitt
- 26: Klappe
- 27: Tauwasserablauf
- 28: Tür
- h₁: Höhe von 25
- h₂: Höhe von 23

## Patentansprüche

1. Kühlvorrichtung, insbesondere zum Kühlen von Kühlräumen, mit zwei wechselweise aktivierbaren Wärmetauschern (2), insbesondere Verdampfer oder Kühler eines Kältekreislaufs, und mindestens einem Gebläse (1) zum Hindurchblasen von Gas, insbesondere Luft, durch die Wärmetauscher (2),
**dadurch gekennzeichnet, dass**
die Wärmetauscher (2) so angeordnet sind, dass sie zumindest bei Aktivierung jeweils von dem gesamten Gasstrom des Gebläses (1) durchströmbar sind.

2. Kühlvorrichtung nach Anspruch 1,
**dadurch gekennzeichnet, dass**
die beiden Wärmetauscher (2) in Strömungsrichtung (6, 7) hintereinander angeordnet sind.

3. Kühlvorrichtung nach Anspruch 2,
**dadurch gekennzeichnet, dass**
ein erster Wärmetauscher (2) in Strömungsrichtung (6, 7) vor und ein zweiter Wärmetauscher (2) in Strömungsrichtung (6, 7) hinter dem oder den Gebläsen (1) angeordnet ist.

4. Kühlvorrichtung nach Anspruch 1 oder 2,
**dadurch gekennzeichnet, dass**
beide Wärmetauscher (2) in Strömungsrichtung (6, 7) vor oder beide Wärmetauscher (2) hinter dem oder den Gebläsen (1) angeordnet sind.

5. Kühlvorrichtung nach einem der vorhergehenden Ansprüche,
**dadurch gekennzeichnet, dass**
die Wärmetauscher (2) frei vor bzw. hinter dem oder den Gebläsen (1) angeordnet sind.

6. Kühlvorrichtung nach einem der Ansprüche 1 bis 4,
**dadurch gekennzeichnet, dass**
zwischen dem oder den Gebläsen (1) und den Wärmetauschern (2) Gasführungskanäle (4) angeordnet sind.

7. Kühlvorrichtung nach einem der vorhergehenden Ansprüche,
**dadurch gekennzeichnet, dass**
das oder die Gebläse (1) und die Wärmetauscher (2) innerhalb von Gasführungskanälen angeordnet sind.

8. Kühlvorrichtung nach einem der vorhergehenden Ansprüche,
**dadurch gekennzeichnet, dass**
das oder die Gebläse (1) und die Wärmetauscher (2) in einem gemeinsamen Gehäuse angeordnet sind.

9. Kühlvorrichtung nach Anspruch 8,
**dadurch gekennzeichnet, dass**
zumindest gasaustrittsseitig am Gehäuse Gasführungskanäle anschließbar sind.

10. Kühlvorrichtung nach einem der vorhergehenden Ansprüche,
**dadurch gekennzeichnet, dass**
ein Gebläse (1) mit umkehrbarer Blasrichtung vorgesehen ist.

11. Kühlvorrichtung nach einem der vorhergehenden Ansprüche,
**dadurch gekennzeichnet, dass**
durch klappengesteuerte Fluidführungen die unterschiedliche Durchströmungsrichtung der Wärmetauscher verwirklicht ist.

12. Kühlvorrichtung nach Anspruch 11,
**dadurch gekennzeichnet, dass**
ein Gebläse (1) vorgesehen ist, dessen Blasseite über Umschaltklappen (8) und entsprechende Gasführungskanäle (4, 4a, 4b, 4c, 4d) wechselweise mit dem ersten oder dem zweiten Wärmetauscher (2) und dessen Saugseite mit dem jeweils anderen Wärmetauscher (2) verbindbar ist.

13. Kühlvorrichtung nach Anspruch 11,
**dadurch gekennzeichnet, dass**
ein Gebläse (1) vorgesehen ist, dessen Saugseite mit der Eintrittsöffnung (11) und dessen Blasseite wechselweise mit dem ersten oder dem zweiten Wärmetauscher (2¹, 2²) verbunden ist, und dass der jeweils andere Wärmetauscher (2¹, 2²) einerseits mit dem einen Wärmetauscher (2¹, 2²) und andererseits mit der Austrittsöffnung (12) verbunden ist.

14. Kühlvorrichtung nach Anspruch 11,
**dadurch gekennzeichnet, dass**
zwei gegensinnig und parallel zueinander angeordnete Gebläse (1a, 1b) vorgesehen sind, die jeweils über Gasführungskanäle (4, 4e, 4f) mit den beiden Wärmetauschern (2) verbunden und wechselweise aktivierbar sind.

15. Kühlvorrichtung nach Anspruch 14,
**dadurch gekennzeichnet, dass**
der jeweils nicht aktive Zweig (4e, 4f) über eine Klappe (9) absperrbar ist.

16. Kühlvorrichtung nach einem der vorhergehenden Ansprüche,
**dadurch gekennzeichnet, dass**
die Eintrittsöffnung (1) und die Austrittsöffnung (12) der Vorrichtung unabhängig von der Durchströmungsrichtung (6, 7) der Wärmetauscher (2¹, 2²) jeweils durch dieselbe Öffnung (11, 12) gebildet sind.

17. Kühlvorrichtung nach einem der vorhergehenden Ansprüche,
**dadurch gekennzeichnet, dass**
Eintrittsöffnung (11) und Austrittsöffnung (12) stets auf derselben Seite der Vorrichtung, insbesondere nebeneinander angeordnet sind.

18. Kühlvorrichtung nach einem der vorhergehenden Ansprüche,
**dadurch gekennzeichnet, dass**
die Fluidführungen (18) zumindest abschnittsweise in verschiedenen Ebenen verlaufen.

19. Kühlvorrichtung nach Anspruch 18,
**dadurch gekennzeichnet, dass**
die Fluidführungen (18) über- und untereinander und/oder nebeneinander verlaufen.

20. Kühlvorrichtung nach einem der vorhergehenden Ansprüche,
**dadurch gekennzeichnet, dass**
der Querschnitt der Fluidführungen (18) in verschiedenen Abschnitten (15, 16) unterschiedlich ist.

21. Kühlvorrichtung nach Anspruch 20,
**dadurch gekennzeichnet, dass**
der Querschnitt der Fluidführungen (18) im Bereich der Wärmetauscher (2¹, 2²) größer ist, insbesondere im Verhältnis von etwa 2 : 1, als davor oder dahinter.

22. Kühlvorrichtung nach einem der vorhergehenden Ansprüche,
**dadurch gekennzeichnet, dass**
als Gebläse (1) mindestens ein Radialgebläse vorgesehen ist.

23. Kühlvorrichtung nach einem der vorhergehenden Ansprüche,
**dadurch gekennzeichnet, dass**
in den Gasführungskanälen (4) und/oder im Gebläsegehäuse mindestens ein Filter (3) vorgesehen ist.

24. Kühlvorrichtung nach Anspruch 23,
**dadurch gekennzeichnet, dass**
mindestens ein Drehfilter vorgesehen ist, der in Abhängigkeit von der Gasströmungsrichtung (6, 7) verdrehbar ist.

25. Kühlvorrichtung nach Anspruch 23 oder 24,
**dadurch gekennzeichnet, dass**
mindestens ein Rollfilter vorgesehen ist.

26. Kühlvorrichtung nach Anspruch 25,
**dadurch gekennzeichnet, dass**
der Rollfilter als Einmalfilter ausgebildet ist.

27. Kühlvorrichtung nach Anspruch 25,
**dadurch gekennzeichnet, dass**
die Filterrolle in Abhängigkeit von der Gasströmungsrichtung (6, 7) zyklisch auf- und abwickelbar ist.

28. Kühlvorrichtung nach Anspruch 27,
**dadurch gekennzeichnet, dass**
der Filter bei Bedarf um mindestens die doppelte Filterlänge weiterdrehbar ist.

29. Kühlvorrichtung nach einem der vorhergehenden Ansprüche,
**dadurch gekennzeichnet, dass**
in den Gasführungskanälen (4) und/oder im Gebläsegehäuse mindestens eine Druckmesseinrichtung (5), insbesondere Druckdose, angeordnet ist.

30. Kühlvorrichtung nach Anspruch 29,
**dadurch gekennzeichnet, dass**
eine Druckmesseinrichtung (5) zur Feststellung des Vereisungsgrades eines Wärmetauschers (2) dient.

31. Kühlvorrichtung nach Anspruch 29 oder 30,
**dadurch gekennzeichnet, dass**
eine Druckmesseinrichtung (5) zur Feststellung der Notwendigkeit eines Filterwechsels dient.

32. Kühlvorrichtung nach einem der vorhergehenden Ansprüche,
**dadurch gekennzeichnet, dass**
Mittel vorgesehen sind, die einen Filterwechsel oder ein Weiterdrehen eines Rollfilters nach Ablauf einer vorbestimmten oder vorbestimmbaren Zeit auslösen und/oder die Notwendigkeit einer solchen Maßnahme anzeigen.

33. Kühlvorrichtung nach einem der vorhergehenden Ansprüche,
**dadurch gekennzeichnet, dass**
Mittel vorgesehen sind, durch welche eine Umkehr der Strömungsrichtung (6, 7) des Gases durch die Wärmetauscher (2) in Abhängigkeit einer vorbestimmten oder vorbestimmbaren Zeit ausgelöst wird.

34. Kühlvorrichtung nach einem der vorhergehenden Ansprüche,
**dadurch gekennzeichnet, dass**
in den Gasführungskanälen (4) und/oder im Gebläsegehäuse, insbesondere im Bereich der Austrittsöffnung (12), Mittel (29) zur Entkeimung vorgesehen sind.

35. Kühlvorrichtung nach Anspruch 34,
**dadurch gekennzeichnet, dass**
Mittel zur Entkeimung mittels UV-Strahlen oder Ionisierung vorgesehen sind.

36. Kühlvorrichtung nach Anspruch 34 oder 35,
**dadurch gekennzeichnet, dass**
Mittel zur Einspritzung von Desinfektionsmittel wie Fruchtsäure vorgesehen sind.

37. Kühlvorrichtung nach einem der vorhergehenden Ansprüche,
**dadurch gekennzeichnet, dass**
eine Steuerung für die Aktivierung der Wärmetauscher (2) vorgesehen ist, die einen überlappenden Betrieb ermöglicht.

38. Kühlvorrichtung nach Anspruch 37,
**dadurch gekennzeichnet, dass**
die Steuerung eine Regulierung der Gasfeuchtigkeit ermöglicht.

39. Kühlvorrichtung nach einem der vorhergehenden Ansprüche,
**dadurch gekennzeichnet, dass**
in dem Gebläsegehäuse und/oder den Gasführungen (4) Schalldämpfungseinrichtungen angeordnet sind.

40. Kühlvorrichtung nach einem der vorhergehenden Ansprüche,
**dadurch gekennzeichnet, dass**
die Drehzahl des oder der Gebläse (1) regelbar ist.

41. Kühlvorrichtung nach einem der vorhergehenden Ansprüche,
**dadurch gekennzeichnet, dass**
das Gehäuse (10) mehrere Kammern (18¹ bis 18⁷) aufweist, die jeweils über eine eigene Zutrittsöffnung, insbesondere Tür (28), zugänglich sind.

42. Kühlvorrichtung nach Anspruch 41,
**dadurch gekennzeichnet, dass**
jede Kammer (18¹ bis 18⁷) einen eigenen Tauwasserablauf (27) aufweist.

43. Kühlvorrichtung nach einem der vorhergehenden Ansprüche,
**dadurch gekennzeichnet, dass**
in dem Gehäuse (10) eine Beleuchtungseinrichtung vorgesehen ist.

## Claims

1. A refrigerating apparatus, in particular for the cooling of refrigerating spaces, comprising
two alternately activatable heat exchangers (2), in particular evaporators or coolers of a coolant circuit, and at least one fan (1) for the blowing of gas, in particular air, through the heat exchangers (2),
**characterized in that**
the heat exchangers (2) are arranged such that the total gas flow of the fan (1) flows through each of them at least on activation.

2. A refrigerating apparatus in accordance with claim 1, **characterized in that** the two heat exchangers (2) are arranged behind one another in the direction of flow (6, 7).

3. A refrigerating apparatus in accordance with claim 2, **characterized in that** a first heat exchanger (2) is arranged in front of the fan or fans (1) in the direction of flow (6, 7) and a second heat exchanger (2) is arranged behind the fan or fans (1) in the direction of flow (6, 7).

4. A refrigerating apparatus in accordance with claim 1 or claim 2, **characterized in that** both heat exchangers (2) are arranged in front of the fan or fans (1) in the direction of flow (6, 7) or both heat exchangers (2) are arranged behind the fan or fans (1) in the direction of flow (6, 7).

5. A refrigerating apparatus in accordance with any one of the preceding claims, **characterized in that** the heat exchangers (2) are arranged freely in front of or behind the fan or fans (1).

6. A refrigerating apparatus in accordance with any one of the claims 1 to 4, **characterized in that** gas conducting passages (4) are arranged between the fan or fans (1) and the heat exchangers (2).

7. A refrigerating apparatus in accordance with any one of the preceding claims, **characterized in that** the fan or fans (1) and the heat exchangers (2) are arranged inside gas conducting passages.

8. A refrigerating apparatus in accordance with any one of the preceding claims, **characterized in that** the fan or fans (1) and the heat exchangers (2) are arranged in a common housing.

9. A refrigerating apparatus in accordance with claim 8, **characterized in that** gas conducting passages can be connected to the housing at least at the gas outlet side.

10. A refrigerating apparatus in accordance with any one of the preceding claims, **characterized in that** a fan (1) with a reversible blowing direction is provided.

11. A refrigerating apparatus in accordance with any one of the preceding claims, **characterized in that** the different directions of throughflow of the heat exchangers are realized by valve-controlled fluid guides.

12. A refrigerating apparatus in accordance with claim 11, **characterized in that** a fan (1) is provided whose blow side can be alternately connected to the first or second heat exchangers (2) via switchover valves (8) and corresponding gas conducting passages (4, 4a, 4b, 4c, 4d) and whose suction side can be connected to the respectively other heat exchanger (2).

13. A refrigerating apparatus in accordance with claim 11, **characterized in that** a fan (1) is provided whose suction side is connected to the inlet opening (11 and whose blowing side is alternately connected to the first or the second heat exchangers (2¹, 2²); and **in that** the respectively other heat exchanger (21, 2²) is connected to the one heat exchanger (2¹, 2²), on the one hand, and to the outlet opening (12), on the other hand.

14. A refrigerating apparatus in accordance with claim 11, **characterized in that** two fans (1a, 1b) are provided which are arranged in opposite senses and parallel to one another and which are each connected to the two heat exchangers (2) via gas conducting passages (4, 4e, 4f) and which are alternately activatable.

15. A refrigerating apparatus in accordance with claim 14, **characterized in that** the respectively non-active branch (4e, 4f) can be closed via a valve (9).

16. A refrigerating apparatus in accordance with any one of the preceding claims, **characterized in that** the inlet opening (1) and the outlet opening (12) of the apparatus are each formed by the same opening (11, 12) irrespective of the throughflow direction (6, 7) of the heat exchangers (2¹, 2²).

17. A refrigerating apparatus in accordance with any one of the preceding claims, **characterized in that** the inlet opening (11) and the outlet opening (12) are always arranged on the same side of the apparatus, in particular next to one another.

18. A refrigerating apparatus in accordance with any one of the preceding claims, **characterized in that** the fluid guides (18) extend in different planes at least sectionally.

19. A refrigerating apparatus in accordance with claim 18, **characterized in that** the fluid guides (18) extend over and beneath one another and/or next to one another.

20. A refrigerating apparatus in accordance with any one of the preceding claims, **characterized in that** the cross-section of the fluid guides (18) is different in different sections (15, 16).

21. A refrigerating apparatus in accordance with claim 20, **characterized in that** the cross-section of the fluid guides (18) in the region of the heat exchangers (2¹, 2²) is larger, in particular in a ratio of approximately 2:1, than before or behind them.

22. A refrigerating apparatus in accordance with any one of the preceding claims, **characterized in that** at least one radial fan is provided as the fan (1).

23. A refrigerating apparatus in accordance with any one of the preceding claims, **characterized in that** at least one filter (3) is provided in the gas conducting passages (4) and/or in the fan housing.

24. A refrigerating apparatus in accordance with claim 23, **characterized in that** at least one rotary filter is provided which can be rotated in dependence on the gas flow direction (6, 7).

25. A refrigerating apparatus in accordance with claim 23 or claim 24, **characterized in that** at least one roll filter is provided.

26. A refrigerating apparatus in accordance with claim 25, **characterized in that** the roll filter is made as a disposable filter.

27. A refrigerating apparatus in accordance with claim 25, **characterized in that** the filter roll can be wound on and off cyclically in dependence on the gas flow direction (6, 7).

28. A refrigerating apparatus in accordance with claim 27, **characterized in that** the filter can be further rotated by at least twice the filter length if required.

29. A refrigerating apparatus in accordance with any one of the preceding claims, **characterized in that** at least one pressure measuring device (5), in particular a pressure gage, is arranged in the gas conducting passages (4) and/or in the fan housing.

30. A refrigerating apparatus in accordance with claim 29, **characterized in that** a pressure measuring device (5) serves for the determination of the degree of icing of a heat exchanger (2).

31. A refrigerating apparatus in accordance with claim 29 or claim 30, **characterized in that** a pressure measuring device (5) serves for the determination of the necessity of a filter change.

32. A refrigerating apparatus in accordance with any one of the preceding claims, **characterized in that** means are provided which trigger a filter change or a further rotation of a roll filter after the end of a predetermined or predeterminable time and/or indicate the necessity of such a measure.

33. A refrigerating apparatus in accordance with any one of the preceding claims, **characterized in that** means are provided by which a reversal of the direction of flow (6, 7) of the gas through the heat exchangers (2) is triggered in dependence on a predetermined or predeterminable time.

34. A refrigerating apparatus in accordance with any one of the preceding claims, **characterized in that** means (29) for sterilization are provided in the gas conducting passages (4) and/or in the fan housing, in particular in the region of the outlet opening (12).

35. A refrigerating apparatus in accordance with claim 34, **characterized in that** means for sterilization by means of UV rays or ionization are provided.

36. A refrigerating apparatus in accordance with claim 34 or claim 35, **characterized in that** means are provided for the injection of disinfectant such as fruit acid.

37. A refrigerating apparatus in accordance with any one of the preceding claims, **characterized in that** a control for the activation of the heat exchangers (2) is provided which permits an overlapping operation.

38. A refrigerating apparatus in accordance with claim 37, **characterized in that** the control permits a regulation of the gas humidity.

39. A refrigerating apparatus in accordance with any one of the preceding claims, **characterized in that** noise attenuation devices are arranged in the fan housing and/or in the gas guides (4).

40. A refrigerating apparatus in accordance with any one of the preceding claims, **characterized in that** the speed of rotation of the fan or fans (1) can be regulated.

41. A refrigerating apparatus in accordance with any one of the preceding claims, **characterized in that** the housing (10) has a plurality of chambers (18¹ to 18⁷) which are each accessible via their own access opening, in particular a door (28).

42. A refrigerating apparatus in accordance with claim 4, **characterized in that** each chamber (18¹ to 18⁷) has its own condensate drain (27).

43. A refrigerating apparatus in accordance with any one of the preceding claims, **characterized in that** a lighting device is provided in the housing (10).

## Revendications

1. Appareil de réfrigération, en particulier pour la réfrigération de chambres réfrigérées, comprenant deux échangeurs de chaleur (2) susceptibles d'être activés alternativement, en particulier évaporateur ou refroidisseur d'un circuit de froid, et au moins un ventilateur (1) pour souffler un gaz, en particulier de l'air, à travers les échangeurs de chaleur (2),
**caractérisé en ce que** les échangeurs de chaleur (2) sont agencés de telle façon que, au moins en cas d'activation, ils peuvent être respectivement traversés par la totalité du courant de gaz du ventilateur (1).

2. Appareil de réfrigération selon la revendication 1,
**caractérisé en ce que** les deux échangeurs de chaleur (2) sont agencés l'un derrière l'autre dans la direction d'écoulement (6, 7).

3. Appareil de réfrigération selon la revendication 2,
**caractérisé en ce qu'**un premier échangeur de chaleur (2) est agencé devant le ou les ventilateur(s) (1) en direction d'écoulement (6, 7), et un second échangeur de chaleur (2) est agencé derrière le ou les ventilateur(s) (1) en direction d'écoulement (6, 7).

4. Appareil de réfrigération selon la revendication 1 ou 2,
**caractérisé en ce que** les deux échangeurs de chaleur (2) sont agencés devant ou derrière le ou les ventilateur(s) (1) en direction d'écoulement (6, 7).

5. Appareil de réfrigération selon l'une des revendications précédentes,
**caractérisé en ce que** les échangeurs de chaleur (2) sont agencés librement devant ou derrière le ou les ventilateur(s) (1).

6. Appareil de réfrigération selon l'une des revendications 1 à 4,
**caractérisé en ce que** des canaux de guidage de gaz (4) sont agencés entre le ou les ventilateur(s) (1) et les échangeurs de chaleur (2).

7. Appareil de réfrigération selon l'une des revendications précédentes,
**caractérisé en ce que** le ou les ventilateur(s) et les échangeurs de chaleur (2) sont agencés à l'intérieur de canaux de guidage de gaz.

8. Appareil de réfrigération selon l'une des revendications précédentes,
**caractérisé en ce que** le ou les ventilateur(s) (1) et les échangeurs de chaleur (2) sont agencés dans un boîtier commun.

9. Appareil de réfrigération selon la revendication 8,
**caractérisé en ce que** des canaux de guidage de gaz sont susceptibles d'être raccordés au boîtier, au moins du côté de sortie du gaz.

10. Appareil de réfrigération selon l'une des revendications précédentes,
**caractérisé en ce qu'**un ventilateur (1) est prévu avec possibilité d'inverser la direction de soufflage.

11. Appareil de réfrigération selon l'une des revendications précédentes,
**caractérisé en ce que** les différentes directions d'écoulement à travers les échangeurs de chaleur sont réalisées par des guidages de fluide commandés par des clapets.

12. Appareil de réfrigération selon la revendication 11,
**caractérisé en ce qu'**il est prévu un ventilateur (1), dont le côté soufflage est susceptible d'être relié, au moyen de clapets d'inversion (8) et de canaux de guidage de gaz correspondants (4, 4a, 4b, 4c, 4d), alternativement au premier ou au second échangeur de chaleur (2), et dont le côté aspiration est susceptible d'être relié respectivement à l'autre échangeur de chaleur (2).

13. Appareil de réfrigération selon la revendication 11,
**caractérisé en ce qu'**il est prévu un ventilateur (1), dont le côté aspiration est relié à l'ouverture d'entrée (11), et dont le côté de soufflage est relié alternativement au premier ou au second échangeur de chaleur (2¹, 2²), et **en ce que** l'autre échangeur de chaleur respectif (2¹,2²) est relié d'une part à l'échangeur de chaleur en question (2¹, 2²) et d'autre part à l'ouverture de sortie (12).

14. Appareil de réfrigération selon la revendication 11,
**caractérisé en ce qu'**il est prévu deux ventilateurs (1a, 1b) tournant en sens inverse et agencés parallèlement l'un à l'autre, qui sont reliés aux deux échangeurs de chaleur (2) via des canaux de guidage de gaz respectifs (4, 4e, 4f) et qui sont susceptibles d'être activés alternativement.

15. Appareil de réfrigération selon la revendication 14,
**caractérisé en ce que** la branche respectivement non active (4e, 4f) est susceptible d'être isolée au moyen d'un clapet (9).

16. Appareil de réfrigération selon l'une des revendications précédentes,
**caractérisé en ce que** l'ouverture d'entrée (11) et l'ouverture de sortie (12) de l'appareil sont formées respectivement par la même ouverture (11, 12), indépendamment de la direction de l'écoulement (6, 7) traversant les échangeurs de chaleur (2¹, 2²).

17. Appareil de réfrigération selon l'une des revendications précédentes,
**caractérisé en ce que** l'ouverture d'entrée (11) et l'ouverture de sortie (12) sont agencées toujours du même côté de l'appareil, en particulier l'une à côté de l'autre.

18. Appareil de réfrigération selon l'une des revendications précédentes,
**caractérisé en ce que** les guidages de fluide (18) s'étendent, au moins par tronçons, dans des plans différents.

19. Appareil de réfrigération selon la revendication 18,
**caractérisé en ce que** les guidages de fluide (18) s'étendent l'un au-dessus de l'autre à et/ou l'un à côté de l'autre.

20. Appareil de réfrigération selon l'une des revendications précédentes,
**caractérisé en ce que** la section des guidages de fluide (18) est différente dans des tronçons différents (15, 16).

21. Appareil de réfrigération selon la revendication 20,
**caractérisé en ce que** la section des guidages de fluide (18) dans la zone des échangeurs de chaleur (2¹, 2²) est supérieure à celle avant ou après cette zone, en particulier dans un rapport d'environ 2:1.

22. Appareil de réfrigération selon l'une des revendications précédentes,
**caractérisé en ce qu'**il est prévu au moins un ventilateur radial à titre de ventilateur (1).

23. Appareil de réfrigération selon l'une des revendications précédentes,
**caractérisé en ce qu'**il est prévu au moins un filtre (3) dans les canaux de guidage de gaz (4) et/ou dans le boîtier de ventilateur.

24. Appareil de réfrigération selon la revendication 23,
**caractérisé en ce qu'**il est prévu au moins un filtre rotatif, qui peut être tourné en fonction de la direction d'écoulement du gaz (6, 7).

25. Appareil de réfrigération selon la revendication 23 ou 24,
**caractérisé en ce qu'**il est prévu au moins un filtre à rouleau.

26. Appareil de réfrigération selon la revendication 25,
**caractérisé en ce que** le filtre à rouleau est réalisé sous forme de filtre à usage unique.

27. Appareil de réfrigération selon la revendication 25,
**caractérisé en ce que** le rouleau de filtre est susceptible d'être enroulé et déroulé en fonction de la direction d'écoulement du gaz (6, 7), de façon cyclique.

28. Appareil de réfrigération selon la revendication 27,
**caractérisé en ce que**, en cas de besoin, le filtre est susceptible être tourné davantage, au moins du double de la longueur de filtrage.

29. Appareil de réfrigération selon l'une des revendications précédentes,
**caractérisé en ce qu'**au moins un dispositif de mesure de pression (5), en particulier un capteur de pression, est agencé dans les canaux de guidage de gaz (4) et/ou dans le boîtier de ventilateur.

30. Appareil de réfrigération selon la revendication 29,
**caractérisé en ce qu'**un dispositif de mesure de pression (5) sert à déterminer le degré de givrage d'un échangeur de chaleur (2).

31. Appareil de réfrigération selon la revendication 29 ou 30,
**caractérisé en ce qu'**un dispositif de mesure de pression (5) sert à déterminer la nécessité d'échanger le filtre.

32. Appareil de réfrigération selon l'une des revendications précédentes,
**caractérisé en ce qu'**il est prévu des moyens qui déclenchent un échange du filtre ou une poursuite de la rotation d'un filtre à rouleau après écoulement d'un temps prédéterminé ou prédéterminable et/ou qui indiquent la nécessité d'une telle intervention.

33. Appareil de réfrigération selon l'une des revendications précédentes,
**caractérisé en ce qu'**il est prévu des moyens grâce auxquels une inversion de la direction d'écoulement (6, 7) du gaz à travers les échangeurs de chaleur (2) est déclenchée en fonction d'un temps prédéterminé ou prédéterminable.

34. Appareil de réfrigération selon l'une des revendications précédentes,
**caractérisé en ce qu'**il est prévu des moyens (29) pour la destruction de germes, dans les canaux de guidage de gaz (4) et/ou dans le boîtier de ventilateur, en particulier dans la zone de l'ouverture de sortie (12).

35. Appareil de réfrigération selon la revendication 34,
**caractérisé en ce qu'**il est prévu des moyens pour la destruction de germes, à l'aide de rayons U V ou par ionisation.

36. Appareil de réfrigération selon 1a revendication 34 ou 35,
**caractérisé en ce qu'**il est prévu des moyens pour pulvériser un produit de désinfection, comme de l'acide de fruits.

37. Appareil de réfrigération selon l'une des revendications précédentes,
**caractérisé en ce qu'**il est prévu une commande pour l'activation des échangeurs de chaleur (2), qui permet un fonctionnement en chevauchement.

38. Appareil de réfrigération selon la revendication 37,
**caractérisé en ce que** la commande permet une régulation de l'humidité du gaz.

39. Appareil de réfrigération selon l'une des revendications précédentes,
**caractérisé en ce que** des dispositifs d'amortissement sonore sont agencés dans le boîtier de ventilateur et/ou dans les guidages de gaz (4).

40. Appareil de réfrigération selon l'une des revendications précédentes,
**caractérisé en ce que** la vitesse de rotation du ou des ventilateur(s) (1) peut être régulée.

41. Appareil de réfrigération selon l'une des revendications précédentes,
**caractérisé en ce que** le boîtier (10) comporte plusieurs chambres (18¹ à 18⁷) qui sont chacune accessibles via une propre ouverture d'accès, en particulier une porte (28).

42. Appareil de réfrigération selon la revendication 41,
**caractérisé en ce que** chaque chambre (18¹ à 18⁷) comporte une propre évacuation (27) pour l'eau de condensation.

43. Appareil de réfrigération selon l'une des revendications précédentes,
**caractérisé en ce qu'**il est prévu un système d'éclairage dans le boîtier (10).
